# EUROPEAN PATENT APPLICATION

(11) **EP 4 651 004 A1**
(43) Date of publication of application: **19.11.2025**
(21) Application number: 25204763.4
(22) Date of filing: 25.09.2025
(51) Int. Cl.: G06F 21/79, G06F 21/64

(54) **METHOD, APPARATUS AND MEDIUM FOR DATA SECURITY CHECK IN INTEGRATED CIRCUIT**

(30) Priority: 24.10.2024 CN 202411498577
(71) Applicant: Horizon Journey (Shanghai) Technology Co., Ltd., Shanghai 201306 (CN)
(72) Inventor: CHEN, Chen, Shanghai 201306 (CN); LI, Jing, Shanghai 201306 (CN); YANG, Ruiqi, Shanghai 201306 (CN); LI, Siqi, Shanghai 201306 (CN); JIN, Lingfang, Shanghai 201306 (CN); KANG, Bo, Shanghai 201306 (CN); LI, Wenxing, Shanghai 201306 (CN)
(74) Representative: v. Bezold & Partner Patentanwälte - PartG mbB

(57) **Abstract**

Embodiments of this disclosure disclose a method for data security check and apparatus in an integrated circuit, and a medium. The method includes: determining, according to an address corresponding to a write pointer, a first address segment in which a first set of data is written into a first memory located in the integrated circuit; storing the first set of data into a storage space of the first address segment in the first memory; determining target encoded data based on the first set of data; storing the target encoded data into a second memory located in the integrated circuit, where the first memory is different from the second memory; and performing, based on the target encoded data, security check on a second set of data that is read from the first memory.

## Description

### FIELD OF THE INVENTION

This disclosure relates to data processing technologies in integrated circuits, and in particular, to a method, an apparatus and a medium for data security check in an integrated circuit.

### BACKGROUND OF THE INVENTION

In in-vehicle applications, a high-speed in-vehicle chip (such as an in-vehicle SoC chip, a microcontroller chip, or an Ethernet chip) has a large amount of data for exchange, which requires a large quantity of first input first output (FIFO) memories for caching data temporarily, thereby resolving problems of speed mismatch and the like. The FIFO memory is a buffering element of a system. Without the FIFO memory, the entire high-speed in-vehicle chip cannot operate normally. During application, the data stored in the FIFO memory requires security protection, and how to achieve low-cost security protection for the FIFO memory is a problem that urgently needs to be resolved.

### SUMMARY OF THE INVENTION

To resolve the foregoing technical problem, this disclosure is proposed. Embodiments of this disclosure provide a method for data security check and apparatus in an integrated circuit, and a medium.

According to an aspect of an embodiment of this disclosure, a method for data security check in an integrated circuit is provided, including:
determining, according to an address corresponding to a write pointer, a first address segment in which a first set of data is written into a first memory located in the integrated circuit;
storing the first set of data into a storage space of the first address segment in the first memory;
determining target encoded data based on the first set of data;
storing the target encoded data into a second memory located in the integrated circuit, wherein the first memory is different from the second memory; and
performing, based on the target encoded data, security check on a second set of data that is read from the first memory.

According to another aspect of an embodiment of this disclosure, an apparatus for data security check in an integrated circuit is provided, including:
an address determining module, configured to determine, according to an address corresponding to a write pointer, a first address segment in which a first set of data is written into a first memory located in the integrated circuit;
a data storage module, configured to store the first set of data into a storage space of the first address segment in the first memory;
a data encoding module, configured to determine target encoded data based on the first set of data;
a code writing module, configured to store the target encoded data into a second memory located in the integrated circuit, where the first memory is different from the second memory; and
a security check module, configured to perform, based on the target encoded data, security check on a second set of data that is read from the first memory.

According to still another aspect of an embodiment of this disclosure, a computer readable storage medium is provided. The storage medium stores a computer program, when executed by a processor, causes the processor to implement the method for data security check in an integrated circuit according to any one of the foregoing embodiments.

According to a still yet another aspect of an embodiment of this disclosure, an electronic device is provided, wherein the electronic device includes:
a processor; and
a memory, configured to store processor-executable instructions, wherein
the processor is configured to read the executable instructions from the memory, and execute the instructions to implement the method for data security check in an integrated circuit according to any one of the foregoing embodiments.

According to the method, the apparatus and the medium for data security check in an integrated circuit, that are provided in the foregoing embodiments of this disclosure, when the first set of data is stored in the storage space in the first memory, the target encoded data corresponding to the first set of data is stored in the second memory; and when the second set of data in the first memory is read, data check is performed based on the target encoded data that is independently stored. Because the target encoded data for data check and the first set of data are stored in different memories, the first set of data and the target encoded data are prevented from being stored together. Therefore, an amount of data stored in the first memory is reduced, which reduces a data bit width during data transmission and reduces costs of the data check, thereby achieving low-cost data check.

The technical solutions of this disclosure are further described below in detail with reference to the accompanying drawings and the embodiments.

### BRIEF DESCRIPTION OF THE DRAWINGS

By describing embodiments of this disclosure more detailed with reference to accompanying drawings, the foregoing and other objectives, features, and advantages of this disclosure will become more apparent. The accompanying drawings are used to provide further understanding of the embodiments of this disclosure, constitute a part of the specification, are used to explain this disclosure together with the embodiments of this disclosure, and do not constitute limitation to this disclosure. In the accompanying drawings, same reference numerals generally represent same components or steps.
FIG. 1 is a schematic diagram of a structure of a data security check system in an integrated circuit according to an exemplary embodiment of this disclosure;
FIG. 2 is a schematic flowchart of a method for data security check in an integrated circuit according to an exemplary embodiment of this disclosure;
FIG. 3 is a schematic flowchart of step 206 in the embodiment shown in FIG. 2 of this disclosure;
FIG. 4 is a schematic flowchart of step 2062 in the embodiment shown in FIG. 3 of this disclosure;
FIG. 5 is a schematic flowchart of step 210 in the embodiment shown in FIG. 2 of this disclosure;
FIG. 6 is a schematic flowchart of a method for data security check in an integrated circuit according to another exemplary embodiment of this disclosure;
FIG. 7 is a schematic diagram of a structure of an apparatus for data security check in an integrated circuit according to an exemplary embodiment of this disclosure;
FIG. 8a is a schematic diagram of a structure of an apparatus for data security check in an integrated circuit according to another exemplary embodiment of this disclosure;
FIG. 8b is a schematic diagram of a structure of a data encoding module according to another exemplary embodiment of this disclosure;
FIG. 9a is a schematic diagram of a structure of an apparatus for data security check in an integrated circuit according to still another exemplary embodiment of this disclosure;
FIG. 9b is a schematic diagram of a structure of a security check module according to yet another exemplary embodiment of this disclosure; and
FIG. 10 is a diagram of a structure of an electronic device according to an exemplary embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited by the exemplary embodiments described herein.

It should be noted that unless otherwise specified, the scope of this disclosure is not limited by relative arrangement, numeric expressions, and numerical values of components and steps described in these embodiments.

### Application overview

In a process of implementing this disclosure, the inventor finds that there may be a large quantity of FIFO memories in an integrated circuit (such as a high-speed in-vehicle chip), which are used for caching, transferring, and computational speed matching of data. Functions of the FIFO memory include: 1) caching continuous data streams to avoid data losses during operations of pushing into a stack and storage operations; 2) collecting data for pushing into a stack and storage, wherein through the data collection processing, pushing into a stack and storage that originally require a plurality of bus operations can be completed through one bus operation, thereby avoiding frequent bus operations and reducing loads on a CPU; and 3) allowing the system to perform a direct memory access (DMA) operation, thereby improving a data transmission speed. Therefore, security check is required when data is read from the FIFO memory. When the FIFO memory has a relatively large bit width and an extreme depth, a lot of data bit widths need to be occupied if a conventional method is adopted to perform security check on the data stored in the FIFO memory. To resolve the foregoing problem, this disclosure provides a method for data security check in an integrated circuit, which reduces the bit width occupied when security check is performed on the data stored in the FIFO memory, compresses a chip area, and reduces costs of the integrated circuit.

### Exemplary method

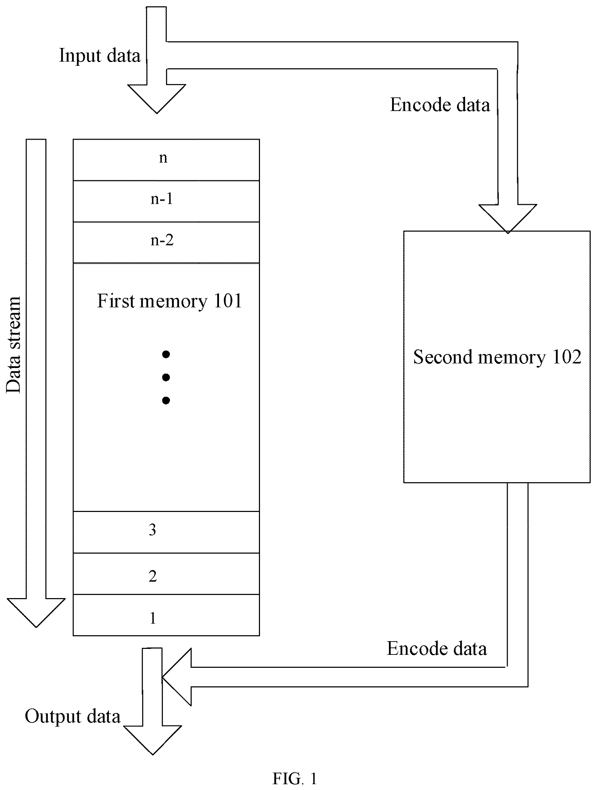

FIG. 1 is a schematic diagram of a structure of a data security check system in an integrated circuit according to an exemplary embodiment of this disclosure. As shown in FIG. 1, the system provided in this embodiment of this disclosure includes a first memory 101 and a second memory 102.

The first memory 101 is a FIFO memory, which is configured to store interaction data. During reading, data is read out in an order in which the data is stored. In other words, data stored in the FIFO memory first is read out first. For example, as shown in FIG. 1, a direction of a data flow is from top to bottom. In this case, input data that is first input into the first memory 101 may be stored at a bottom (a storage space with a number of 1 in FIG. 1), and data stored later may be stored sequentially according to an order of storage spaces in the first memory 101 (to indicate the order, storage addresses in the first memory 101 are sorted in an order of numbers 1, 2, 3... n-2, n-1, and n in FIG. 1). When read from the first memory 101, data is read in the order of the storage spaces, and the data stored first is read out first.

The second memory 102 stores encoded data corresponding to the input data when data is stored in the first memory 101. When output data is read from the first memory 101, encoded data corresponding to the output data is read from the second memory 102 and integrity of the output data is checked.

### Exemplary method

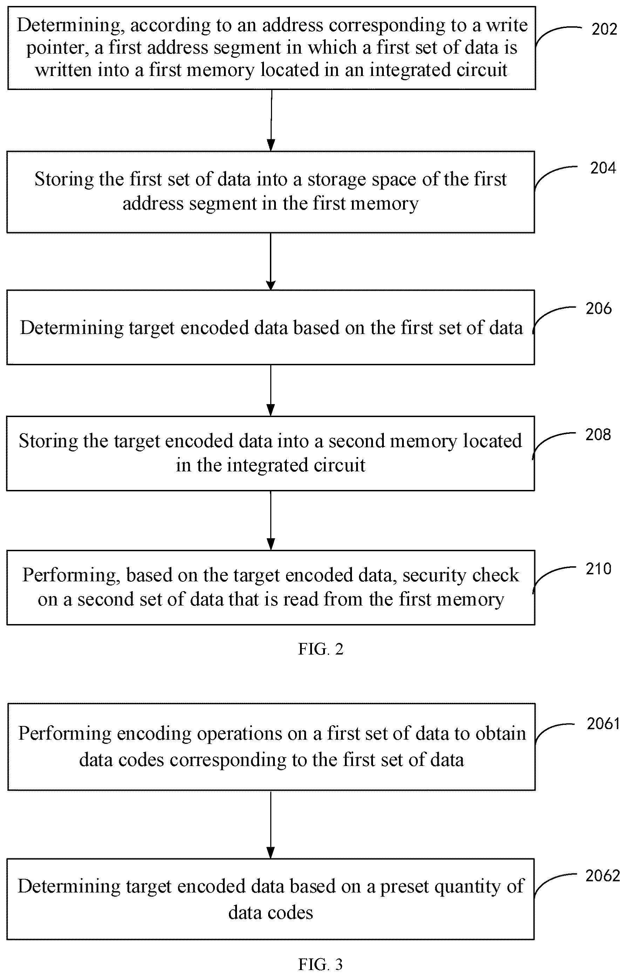

FIG. 2 is a schematic flowchart of a method for data security check in an integrated circuit according to an exemplary embodiment of this disclosure. This embodiment may be applied to an electronic device such as an onboard integrated circuit. As shown in FIG. 2, the following steps are included.

Step 202: Determining, according to an address corresponding to a write pointer, a first address segment in which a first set of data is written into a first memory located in the integrated circuit.

A pointer describes a position of data in a memory, and indicates an entity occupying a storage space and a value of a relative distance from a starting position in this space. The write pointer is a pointer corresponding to the data being written. In this embodiment, the first address segment is determined by a start address and an end address. Optionally, the start address of the first address segment of the data to be written in the first memory is indicated by using the write pointer. Optionally, a size of the first address segment may be determined by a size of the first set of data. To be specific, the start address of the first address segment is determined by the write pointer, and the end address of the first address segment is obtained by accumulating sizes of first set data from the start address, so as to determine the first address segment.

Step 204: Storing the first set of data into a storage space of the first address segment in the first memory.

In an embodiment, the first memory may be a FIFO memory. There is a correspondence between the storage space in the first memory and an address. For example, a corresponding storage space with a certain size may be found based on the start address and the end address corresponding to the first address segment. For example, the first memory may store 256 bytes, with the first address segment from 00000000 (the start address) to 00000110 (the end address), which corresponds to a 0^{th} byte to a 6^{th} byte in the storage space. In this case, the first set of data is stored based on the storage space from the 0^{th} byte to the 6^{th} byte.

Step 206: Determining target encoded data based on the first set of data.

Optionally, encoding processing is performed on the first set of data at least once to obtain the target encoded data. Encoding methods may include but are not limited to a cyclic redundancy check (CRC) method, a hash encoding method, a compression encoding method, and an assigned identifier encoding method. The target encoded data obtained may include but is not limited to a cyclic redundancy check code, a hash code, a compression code, and an identification code.

Step 208: Storing the target encoded data into a second memory located in the integrated circuit.

The first memory is different from the second memory. The first memory and the second memory are configured to store different data; and are independent of each other, so as to implement independent storage of the first set of data and the target encoded data. Optionally, a memory type of the second memory may be same as or different from that of the first memory. For example, the second memory may be a FIFO memory.

Step 210: Performing, based on the target encoded data, security check on a second set of data that is read from the first memory.

In existing technologies, data often faces various interferences and errors during transmission, such as data losses, data tampering, and other situations. If no effective verification is performed, these data errors may cause a system to run abnormally or even crash. Therefore, data verification is particularly important in FIFO. In this embodiment of this disclosure, effective data security check is achieved by performing security check on the second set of data based on the target encoded data.

The data security check in this embodiment may be data integrity check, which is implemented by adding a check code or a check value during data transmission. A transmit end calculates the check code when sending data, and a receive end recalculates the check code again for comparison after receiving the data, so as to verify integrity of the data.

According to the method for data security check in an integrated circuit that is provided in this embodiment of this disclosure, when the first set of data is stored in the storage space in the first memory, the target encoded data corresponding to the first set of data is stored in the second memory; and when the second set of data in the first memory is read, data check is performed based on the target encoded data that is independently stored. Because the target encoded data for data check and the first set of data are stored in different memories, the first set of data and the target encoded data are prevented from being stored together. Therefore, an amount of data stored in the first memory is reduced, which reduces a data bit width during data transmission and reduces costs of the data check, thereby implementing low-cost data check.

As shown in FIG. 3, on the basis of the embodiment shown in FIG. 2, step 206 may include the following steps.

Step 2061: Performing encoding operations on the first set of data to obtain data codes corresponding to the first set of data.

Optionally, the first set of data may include a preset amount of data, where a value of the preset amount may be set according to specific application scenarios, thereby achieving data encoding with adjustable granularity. Optionally, the corresponding data codes are obtained by encoding the preset amount of data included in the first set of data, separately. The granularity refers to a size or precision of a relevant data unit (corresponding to the first set of data in this embodiment) during data observation or processing, which may be coarse granularity (being a relatively large data unit) or fine granularity (being a relatively small data unit). A large amount of encoded data is stored at the coarse granularity, indicating more spatial compression.

Step 2062: Determining the target encoded data based on a preset quantity of data codes.

In this embodiment, granularity of data encoding is adjusted through the preset quantity, and different preset quantities may be set in different application scenarios, to meet requirements of corresponding application scenarios. For example, when the amount of data is relatively large, to improve check efficiency, the preset quantity is increased. The amount of data on which data check is performed once is increased to improve efficiency of the data check. For another example, when the amount of data is relatively small and high accuracy is required, the preset quantity is reduced. By reducing the amount of data on which data check is performed once, data with errors may be quickly located, so that data check accuracy is improved.

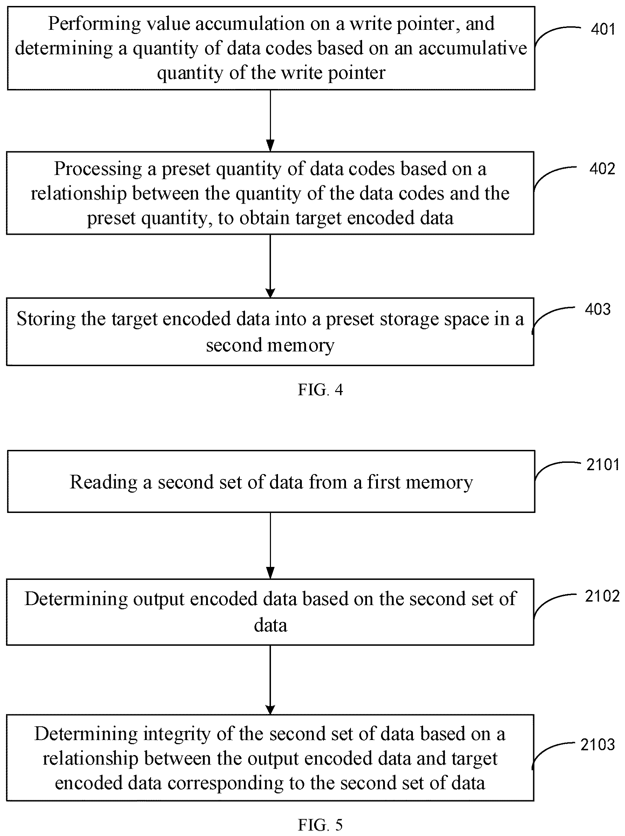

As shown in FIG. 4, on the basis of the embodiment shown in FIG. 3, step 2062 may include the following steps.

Step 401: Performing value accumulation on the write pointer, and determining a quantity of the data codes based on an accumulative quantity of the write pointer.

Optionally, after an address is determined for the corresponding write data by each write pointer, a write pointer corresponding to a next piece of write data is determined based on that write pointer. In other words, an amount of stored data may be determined based on an accumulated value of the write pointer. In a single storage, an amount of data included in the first set of data may be determined based on the accumulative quantity of the write pointer, so as to determine the quantity of the data codes.

Step 402: Processing the preset quantity of data codes based on a relationship between the quantity of the data codes and the preset quantity, to obtain the target encoded data.

Optionally, the quantity of the data codes may be counted by using a counter, and the relationship between the quantity of the data codes and the preset quantity may be determined based on a counting result of the counter. Optionally, whether to determine the target encoded data is determined by calculating whether a remainder obtained by dividing the counting result of the counter by the preset quantity is 0. For example, in response to that the remainder is 0, the target encoded data is determined based on the preset quantity of data codes; and in response to that the remainder is not 0, the target encoded data is not determined. For another example, when the quantity in the counter reaches the preset quantity, zeroing out is performed once to determine, based on whether data in the counter is 0, whether to determine the target encoded data. For example, in response to that the data in the counter is 0, the target encoded data is determined based on the preset quantity of data codes; and in response to that the data in the counter is not 0, the target encoded data is not determined.

Optionally, the preset quantity of data codes may be accumulated to obtain the target encoded data. Alternatively, encoding or other data processing may be performed on the preset quantity of data codes to obtain the target encoded data. For example, at least one of addition, subtraction, multiplication, and division is performed on the preset quantity of data codes. For another example, hash processing is performed on the preset quantity of data codes.

Step 403: Storing the target encoded data into a preset storage space in the second memory.

Optionally, the determining of the preset storage space in the second memory may be similar to that of the storage space in the first memory. For example, the preset storage space is determined based on the corresponding write pointer.

In this embodiment, data is encoded each time being written into the first memory. Each time the data is stored, the write pointer performs accumulation correspondingly. Each time an accumulated value of the write pointer reaches the preset quantity, the target encoded data is obtained based on a preset amount of encoded data, and is stored in the second memory. By storing only the target encoded data in the second memory, an amount of the target encoded data is much smaller than that of the encoded data (the amount of the target encoded data is 1/m of that of the encoded data, where m represents the preset quantity), and thus the amount of data stored in the second memory is reduced. Therefore, the storage space of the second memory may be compressed to reduce space occupied by the second memory in the integrated circuit.

As shown in FIG. 5, on the basis of the embodiment shown in FIG. 2, step 210 may include the following steps.

Step 2101: Reading the second set of data from the first memory.

Optionally, since the first memory is a FIFO memory, during data reading, the read second set of data is data stored earliest in the first memory at a current moment. For example, the second set of data is data located in the storage spaces with the numbers from 1 to m (where m represents the preset quantity) in the first memory shown in FIG. 1. For example, the second set of data may be the first set of data.

Optionally, according to a second address segment corresponding to a read pointer, data is read from a storage space of the second address segment in the first memory, and value accumulation is performed on the read pointer.

In this embodiment, the second address segment corresponding to the data stored earliest in the first memory may be directed by the read pointer. The data stored in the storage space corresponding to the second address segment is the data stored earliest at the current moment. The data in this storage space is read to achieve first input first output data reading. After the second set of data is read, the storage space corresponding to the second address segment is cleared and thus can continue to receive stored data. Moreover, by performing value accumulation on the read pointer, address accuracy during next data reading is ensured.

The second set of data is obtained by determining a preset amount of read data based on a value accumulation result.

Optionally, during data readout, since the target encoded data stored in the second memory corresponds to a preset amount of input data, to implement integrity check for the readout data based on the target encoded data, the preset amount of read data is continuously read out. The second set of data is used as checking granularity, and the preset amount of read data is checked each time, thereby improving efficiency of the data check.

Step 2102: Determining output encoded data based on the second set of data.

Optionally, for all read data included in the second set of data, encoding methods for encoding the input data may be separately adopted to encode the input data, to obtain the output encoded data that is obtained by encoding the second set of data.

Step 2103: Determining integrity of the second set of data based on a relationship between the output encoded data and the target encoded data corresponding to the second set of data.

Optionally, the target encoded data is encoded data that is obtained by encoding the second set of data and is stored in the second memory when the second set of data is input into the first memory.

In this embodiment, the output encoded data is obtained by using a same encoding method as the target encoded data. Therefore, if data before encoding is same, the corresponding output encoded data and the target encoded data needs to be same. In this embodiment, the output encoded data obtained by encoding the second set of data during reading is matched with the target encoded data obtained by encoding during input. When the output encoded data is same as the target encoded data, it is determined that the second set of data is complete; or otherwise, it is determined that the second set of data is incomplete. In response to that the second set of data is incomplete, error reporting is performed.

Optionally, step 2102 may include:
performing at least one encoding operation on the second set of data to obtain at least one operation code; and determining the output encoded data based on the at least one operation code.

In this embodiment, each piece of output data included in the second set of data may be encoded. An encoding method for the encoding processing is same as an encoding method used when data is stored into the first memory, thereby ensuring comparability between the output encoded data and the target encoded data. Optionally, each time a piece of output data is read, encoding processing is performed on the read output data to obtain an operation code. Output encoded data is not generated before an amount of the output data accumulates to the preset quantity. Only when the amount of the output data reaches the accumulated preset quantity, at least one operation code is processed to obtain the output encoded data. Optionally, the processing for the at least one operation code is same as that for the data code when data is stored in the first memory. For example, the at least one operation code is accumulated to obtain the output encoded data. Alternatively, encoding or other data processing is performed on the at least one operation code to obtain the output encoded data.

In some optional embodiments, step 2103 may include:
determining the target encoded data corresponding to the second set of data in the second memory; and

Optionally, when the second memory is a FIFO memory, the data stored earliest is obtained from the second memory to serve as the target encoded data corresponding to the second set of data. Alternatively, when the second memory is a regular memory, when the second set of data is stored into the first memory, identification codes are assigned to the second set of data and the target encoded data corresponding to the second set of data. The second set of data is stored into the first memory together with the identification code, and the target encoded data is stored into the second memory together with the identification code. During reading of the second set of data, the corresponding target encoded data is obtained in the second memory by using the obtained identification code as an index.
determining the integrity of the second set of data based on a difference between read encoded data and the target encoded data.

Optionally, in response to that there is a difference between the read encoded data and the target encoded data, it is determined that the second set of data is incomplete and error information is sent. In response to that there is no difference between the read encoded data and the target encoded data, it is determined that the second set of data is complete, and data reading from the first memory continues, to read data in a storage space next to the first memory. Integrity check continues to be performed on the read data. In this embodiment, by comparing the read encoded data with the target encoded data, it is determined whether the data read from the first memory is complete during the storage process, thereby protecting data integrity. In addition, since the target encoded data is stored in the second memory, occupation of the storage space in the first memory is reduced, thereby reducing costs of the data integrity check.

In some optional embodiments, a comparator may be used to compare the read encoded data with the target encoded data. For example, the comparator is used to compare each bit of code in the read encoded data and the target encoded data. If any code is different, it may be determined that there is a difference between the read encoded data and the target encoded data. Alternatively, a plurality of bits of codes in the read encoded data and the target encoded data may be compared simultaneously by using a multi-bit comparator, or the codes in the read encoded data and the target encoded data may be compared sequentially by using a single-bit comparator.

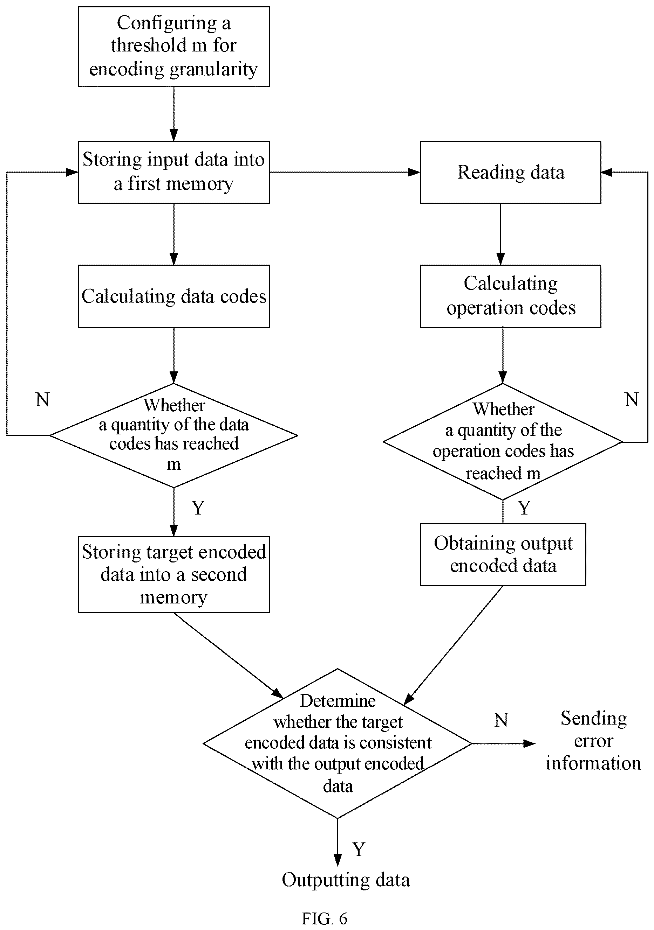

FIG. 6 is a schematic flowchart of a method for data security check in an integrated circuit according to another exemplary embodiment of this disclosure. This embodiment is applied to in-vehicle applications. In the in-vehicle applications, a high-speed in-vehicle chip has a large amount of data for exchange, which requires a large quantity of FIFO memories for caching data temporarily, thereby resolving problems of speed mismatch and the like. As shown in FIG. 6, the following steps are included.

Step 601: Pre-configuring a threshold m for encoding granularity, wherein the threshold of the encoding granularity determines that one target encoded data is obtained for every m pieces of input data stored.

Step 602: Storing input data that needs to be exchanged between chips into a first memory according to a storage address corresponding to a write pointer.

Step 603: Each time a piece of input data is stored, incrementing 1 to a count of the write pointer, and performing an encoding operation on the input data to obtain a data code.

Step 604: Each time a data code (a CRC code) is obtained, incrementing 1 to a value of a first counter (the first counter is aligned with the write pointer, and each time the count of the write pointer is incremented by 1, the value of the corresponding first counter is incremented by 1); determining, based on an accumulated value of the first counter, whether a quantity of data codes has reached m; if yes, proceeding to step 605; or otherwise, continuing data writing and proceeding to step 602.

Step 605: Obtaining target encoded data based on m data codes, storing the target encoded data into a second memory, and zeroing out the first counter.

Step 606: After the input data is stored in the first memory, in response to requirements for data of other chips, reading data from the first memory according to a storage space corresponding to a read pointer.

Step 607: Each time a piece of output data is read, incrementing 1 to a count of the read pointer, and performing an encoding operation on the output data (an encoding method is same as that used in step 603) to obtain an operation code.

Step 608: Each time an operation code is obtained, incrementing 1 to a value of a second counter (the second counter is aligned with the read pointer, and each time the count of the read pointer is incremented by 1, the value of the corresponding second counter is incremented by 1); determining, based on an accumulated value of the second counter, whether a quantity of operation codes has reached m; if yes, proceeding to step 609; or otherwise, continuing data reading and proceeding to step 606.

Step 609: Obtaining output encoded data based on m operation codes, and zeroing out the second counter.

Step 610: Reading a piece of data that is stored earliest in the second memory, and comparing the obtained target encoded data with the output encoded data to determine whether the target encoded data is consistent with the output encoded data, where if yes, it indicates that m pieces of output data corresponding to the output encoded data are normal; or otherwise, error information is sent, indicating that there is an error in the m pieces of output data corresponding to the output encoded data.

Any method for data security check in an integrated circuit provided in the embodiments of this disclosure may be implemented by any suitable device with a data processing capability, including but not limited to a terminal device and a server. Alternatively, any method for data security check in an integrated circuit provided in the embodiments of this disclosure may be implemented by a processor. For example, the processor implements any method for data security check in an integrated circuit in the embodiments of this disclosure by invoking corresponding instructions stored in a memory. Details are not described below.

### Exemplary apparatus

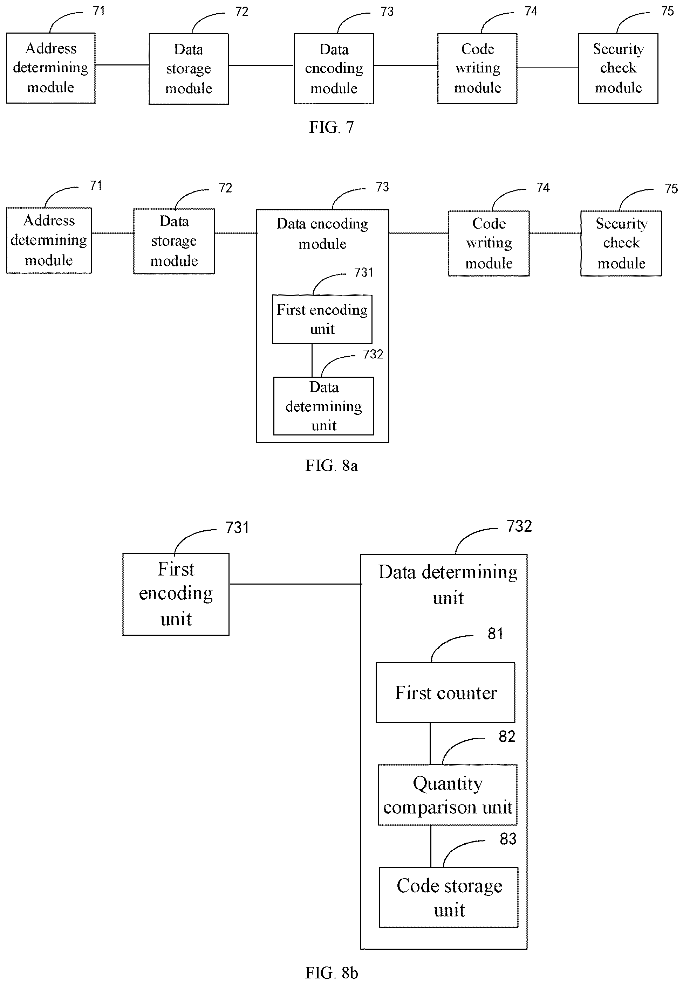

FIG. 7 is a schematic diagram of a structure of an apparatus for data security check in an integrated circuit according to an exemplary embodiment of this disclosure. As shown in FIG. 7, the apparatus provided in this embodiment includes:
an address determining module 71, configured to determine, according to an address corresponding to a write pointer, a first address segment in which a first set of data is written into a first memory located in the integrated circuit;
a data storage module 72, configured to store the first set of data into a storage space of the first address segment in the first memory;
a data encoding module 73, configured to determine target encoded data based on the first set of data;
a code writing module 74, configured to store the target encoded data into a second memory located in the integrated circuit; and
The first memory is different from the second memory.
a security check module 75, configured to perform, based on the target encoded data, security check on a second set of data that is read from the first memory.

According to the apparatus for data security check in an integrated circuit that is provided in this embodiment of this disclosure, when the first set of data is stored in the storage space in the first memory, the target encoded data corresponding to the first set of data is stored in the second memory; and when the second set of data in the first memory is read, data check is performed based on the target encoded data that is independently stored. Because the target encoded data for data check and the first set of data are stored in different memories, the first set of data and the target encoded data are prevented from being stored together. Therefore, an amount of data stored in the first memory is reduced, which reduces a data bit width during data transmission and reduces costs of the data check, thereby implementing low-cost data check.

FIG. 8a is a schematic diagram of a structure of an apparatus for data security check in an integrated circuit according to another exemplary embodiment of this disclosure. As shown in FIG. 8a, the data encoding module 73 in the apparatus provided in this embodiment includes:
a first encoding unit 731, configured to perform encoding operations on the first set of data to obtain data codes corresponding to the first set of data; and
a data determining unit 732, configured to determine the target encoded data based on a preset quantity of data codes.

FIG. 8b is a schematic diagram of a structure of a data encoding module according to another exemplary embodiment of this disclosure. As shown in FIG. 8b, the data determining unit 732 in the data encoding module provided in this embodiment includes:
a first counter 81, configured to perform value accumulation on the write pointer, and determine a quantity of the data codes based on an accumulative quantity of the write pointer;
a quantity comparison unit 82, configured to process the preset quantity of data codes based on a relationship between the quantity of the data codes and the preset quantity, to obtain the target encoded data; and
a code storage unit 83, configured to store the target encoded data into a preset storage space in the second memory.

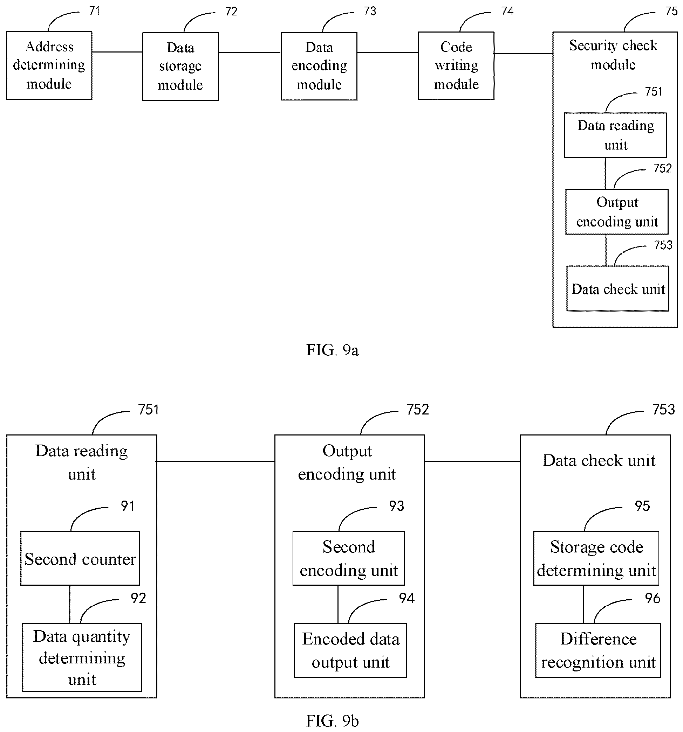

FIG. 9a is a schematic diagram of a structure of an apparatus for data security check in an integrated circuit according to still another exemplary embodiment of this disclosure. As shown in FIG. 9a, the security check module 75 in the apparatus provided in this embodiment includes:
a data reading unit 751, configured to read the second set of data from the first memory;
an output encoding unit 752, configured to determine output encoded data based on the second set of data; and
a data check unit 753, configured to determine integrity of the second set of data based on a relationship between the output encoded data and the target encoded data corresponding to the second set of data.

FIG. 9b is a schematic diagram of a structure of a security check module according to yet another exemplary embodiment of this disclosure. As shown in FIG. 9b, the data reading unit 751 in the security check module provided in this embodiment may include:
a second counter 91, configured to read, according to a second address segment corresponding to a read pointer, data from a storage space of the second address segment in the first memory, and perform value accumulation on the read pointer; and
a data quantity determining unit 92, configured to determine a preset amount of read data based on a value accumulation result, to obtain the second set of data.

Optionally, in the embodiment shown in FIG. 9b, the output encoding unit 752 in the security check module may include:
a second encoding unit 93, configured to perform at least one encoding operation on the second set of data to obtain at least one operation code; and
an encoded data output unit 94, configured to determine the output encoded data based on the at least one operation code.

Optionally, in the embodiment shown in FIG. 9b, the data check unit 753 in the security check module may include:
a storage code determining unit 95, configured to determine the target encoded data corresponding to the second set of data in the second memory; and
a difference recognition unit 96, configured to determine the integrity of the second set of data based on a difference between read encoded data and the target encoded data.

For beneficial technical effects corresponding to the exemplary embodiments of this apparatus, reference may be made to the corresponding beneficial technical effects in the section of exemplary method described above, and details are not described herein again.

### Exemplary electronic device

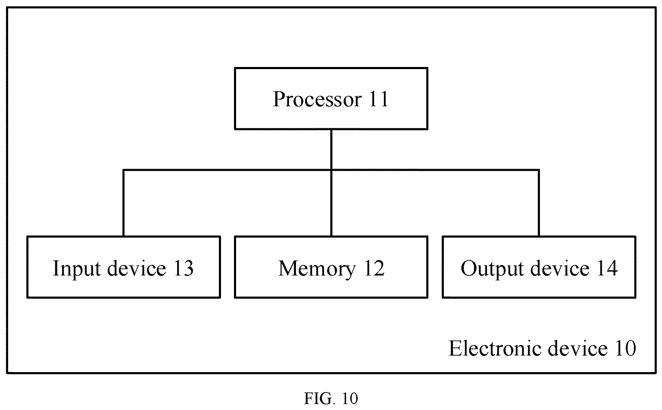

FIG. 10 is a diagram of a structure of an electronic device according to an embodiment of this disclosure. The electronic device includes at least one processor 11 and a memory 12.

The processor 11 may be a central processing unit (CPU) or another form of processing unit having a data processing capability and/or an instruction execution capability, and may control other components in the electronic device 10 to implement desired functions.

The memory 12 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 11 may execute the one or more program instructions to implement the method for data security check in an integrated circuit according to various embodiments of this disclosure that are described above and/or other desired functions.

In an example, the electronic device 10 may further include an input device 13 and an output device 14. These components are connected to each other through a bus system and/or another form of connection mechanism (not shown).

The input device 13 may further include, for example, a keyboard and a mouse.

The output device 14 may output various information to the outside, and may include, for example, a display, a speaker, a printer, a communication network, and a remote output device connected to the communication network.

Certainly, for simplicity, FIG. 10 shows only some of components in the electronic device 10 that are related to this disclosure, and components such as a bus and an input/output interface are omitted. In addition, according to specific application situations, the electronic device 10 may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method for data security check in an integrated circuit according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method for data security check in an integrated circuit according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for each embodiment of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A method for data security check in an integrated circuit, **characterized in that** the method comprises:
determining (202), according to an address corresponding to a write pointer, a first address segment in which a first set of data is written into a first memory located in the integrated circuit;
storing (204) the first set of data into a storage space of the first address segment in the first memory;
determining (206) target encoded data based on the first set of data;
storing (208) the target encoded data into a second memory located in the integrated circuit, wherein the first memory is different from the second memory; and
performing (210), based on the target encoded data, security check on a second set of data that is read from the first memory.

2. The method according to claim 1, wherein the determining (206) target encoded data based on the first set of data comprises:
performing (2061) encoding operations on the first set of data to obtain data codes corresponding to the first set of data; and
determining (2062) the target encoded data based on a preset quantity of data codes.

3. The method according to claim 2, wherein the determining (2062) the target encoded data based on a preset quantity of data codes comprises:
performing (401) value accumulation on the write pointer, and determining a quantity of the data codes based on an accumulative quantity of the write pointer;
processing (402) the preset quantity of data codes based on a relationship between the quantity of the data codes and the preset quantity, to obtain the target encoded data; and
storing (403) the target encoded data into a preset storage space in the second memory.

4. The method according to any one of claims 1 to 3, wherein the performing (210), based on the target encoded data, security check on a second set of data that is read from the first memory comprises:
reading (2101) the second set of data from the first memory;
determining (2102) output encoded data based on the second set of data; and
determining (2103) integrity of the second set of data based on a relationship between the output encoded data and the target encoded data corresponding to the second set of data.

5. The method according to claim 4, wherein the reading (2101) the second set of data from the first memory comprises:
reading, according to a second address segment corresponding to a read pointer, data from a storage space of the second address segment in the first memory, and performing value accumulation on the read pointer; and
determining a preset amount of read data based on a value accumulation result, to obtain the second set of data.

6. The method according to claim 5, wherein the determining (2102) output encoded data based on the second set of data comprises:
performing at least one encoding operation on the second set of data to obtain at least one operation code; and
determining the output encoded data based on the at least one operation code.

7. The method according to claim 5 or 6, wherein the determining (2103) integrity of the second set of data based on a relationship between the output encoded data and the target encoded data corresponding to the second set of data comprises:
determining the target encoded data corresponding to the second set of data in the second memory; and
determining the integrity of the second set of data based on a difference between read encoded data and the target encoded data.

8. An apparatus for data security check in an integrated circuit, **characterized in that** the apparatus comprises:
an address determining module (71), configured to determine, according to an address corresponding to a write pointer, a first address segment in which a first set of data is written into a first memory located in the integrated circuit;
a data storage module (72), configured to store the first set of data into a storage space of the first address segment in the first memory;
a data encoding module (73), configured to determine target encoded data based on the first set of data;
a code writing module (74), configured to store the target encoded data into a second memory located in the integrated circuit, wherein the first memory is different from the second memory; and
a security check module (75), configured to perform, based on the target encoded data, security check on a second set of data that is read from the first memory.

9. The apparatus according to claim 8, wherein the data encoding module (73) comprising:
a first encoding unit (731), configured to perform encoding operations on the first set of data to obtain data codes corresponding to the first set of data; and
a data determining unit (732), configured to determine the target encoded data based on a preset quantity of data codes.

10. The apparatus according to claim 9, wherein the data determining unit (732) comprising:
a first counter (81), configured to perform value accumulation on the write pointer, and determine a quantity of the data codes based on an accumulative quantity of the write pointer;
a quantity comparison unit (82), configured to process the preset quantity of data codes based on a relationship between the quantity of the data codes and the preset quantity, to obtain the target encoded data; and
a code storage unit (83), configured to store the target encoded data into a preset storage space in the second memory.

11. The apparatus according to claim 8, wherein the security check module (75) comprising:
a data reading unit (751), configured to read the second set of data from the first memory;
an output encoding unit (752), configured to determine output encoded data based on the second set of data; and
a data check unit (753), configured to determine integrity of the second set of data based on a relationship between the output encoded data and the target encoded data corresponding to the second set of data.

12. The apparatus according to claim 11, wherein the data reading unit (751) comprising:
a second counter (91), configured to read, according to a second address segment corresponding to a read pointer, data from a storage space of the second address segment in the first memory, and perform value accumulation on the read pointer; and
a data quantity determining unit (92), configured to determine a preset amount of read data based on a value accumulation result, to obtain the second set of data.

13. The apparatus according to claim 11, wherein the output encoding unit (752) comprising:
a second encoding unit (93), configured to perform at least one encoding operation on the second set of data to obtain at least one operation code; and
an encoded data output unit (94), configured to determine the output encoded data based on the at least one operation code.

14. A computer readable storage medium, **characterized in that** the storage medium stores a computer program, when executed by a processor, causes the processor to implement the method for data security check in an integrated circuit according to any one of claims 1 to 7.

15. An electronic device (10), **characterized in that** the electronic device comprises:
a processor (11); and
a memory (12), configured to store processor-executable instructions, wherein
the processor (11) is configured to read the executable instructions from the memory (12), and execute the instructions to implement the method for data security check in an integrated circuit according to any one of claims 1 to 7.
